# EUROPEAN PATENT APPLICATION

(11) **EP 1 227 294 A1**
(43) Date of publication of application: **31.07.2002**
(21) Application number: 00970166.5
(22) Date of filing: 27.10.2000
(51) Int. Cl.: F42B 3/12, B60R 22/46

(54) **ELECTRIC TYPE INITIATOR AND PRETENSIONER**

(30) Priority: 28.10.1999 JP 30715699; 16.06.2000 JP 2000181807
(71) Applicant: Daicel Chemical Industries, Ltd., Osaka 590-8501 (JP)
(72) Inventor: KATSUDA, Nobuyuki, Himeji-shi, Hyogo 671-1146 (JP); KUBOZUKA, Satoshi, Himeji-shi, Hyogo 671-1234 (JP); ODA, Shingo, Himeji-shi, Hyogo 671-1224 (JP)
(74) Representative: Grünecker, Kinkeldey, Stockmair & Schwanhäusser Anwaltssozietät
(86) International application number: JP0007583
(87) International publication number: WO0131282

(57) **Abstract**

The present invention provides an electric type initiator which can secure reliability at a time of activation thereof and can be easily manufactured. The electric type initiator includes a priming 7 to be ignited by a bridge wire 3 generating heat and a cavity 5 for storing the priming. The cavity 5 is formed in a cylindrical shape and its opening end 42 is closed by a cover member 6. The cover member 6 is formed separately from a peripheral wall portion 4 for forming the cavity. Further, the present invention provides an initiator assembly which can be used for any seat belt pretensioner system activated by a gas generated from a gas generator and that can be easily manufactured. The initiator assembly includes an electric type initiator and a collar member. A cavity for storing the priming of the electric type initiator is defined inside a metallic cap member which is in a cylindrical shape with a top and engaged with the header member.

## Description

### Technical Field where the invention belongs

The present invention relates to an electric initiator which is activated by an electric signal at a time of collision, and particularly to an electric type initiator used in a gas generator for an air bag and a seat belt pretensioner as a safety system of a motor vehicle. The present invention further relates to an electric type initiator which is activated by an electric signal at a time of collision, an initiator assembly which is formed by using the electric initiator and a gas generator for a seat belt pretensioner which is formed by the initiator assembly.

### Prior Art

An air bag and a seat belt pretensioner take an important part in decreasing the deaths and injuries due to collisions. An initiator is activated by an electric signal outputted from a collision detecting system, and startes activation of these safety devices.

Conventionally, it is known that the electric initiator includes a large number of constituting components, and most electric initiators have a header and a cup portion which are joined to other to form a cavity. Further, the initiator has at least one conductive pin which is a conductive path extending from the outside of the header and the cup to the cavity. An electric resistance member referred to as a bridge wire is disposed in the cavity, and a conductive pin is connected thereto. A compound having extremely high thermal sensitivity, which is referred to as a primer is disposed in a vicinity of the bridge wire. Further, in the cavity, another compound referred to as an output charge (or a priming) is stored in a vicinity of the primer.

The initiator having such structure starts activation when an electric signal is transmitted to the conductive pin. The bridge wire can convert an electric energy in the signal into a thermal energy, and the thermal energy raise a temperature of a resistance body, thereby an igniting reaction of the primer starts. The igniting reaction of the primer causes an igniting reaction of the output charge, and an increase in a pressure and a heat generated by these reactions break a cup to discharge a hot gas and particles outside.

In the gas generator for the air bag, the hot gas and the particles discharged from the initiator in this manner ignite a solid gas generating agent to generate a gas for inflating an air bag, and in a seat belt pretensioner, the hot gas and the particles move a piston to retract a seat belt.

Accordingly, in order to securely activate the safety devices, it is important that the initiator is securely activated.

Accordingly, in the conventional art, there has been proposed various kinds of initiators for providing an electric initiator with a high reliability and a low cost. For example, in an electric initiator disclosed in JP-A No. 9-504599, for the purpose of solving the above problems, it is attempted to improve a reliability of the initiator by selecting a structure of the pin, a structure of mounting the pin to the header, a structure of mounting the header to the cup, a structure of mounting the resistance body to the pin, a structure of the resistance body, an output charge and a primer.

However, the initiators which have been previously proposed need to be further improved in view of ensuring a sufficient operational reliability and easy manufacturing.

The header has been conventionally formed of a metal or a resin. It is difficult to manufacture and work a header made of a metal.

There has been provided a seat belt pretensioner system which comprises a gas generator including an initiator and a seat belt retracting structure including a piston which is activated by a gas generated from the gas generator. In such seat belt pretensioner system which is activated by a gas generated from the gas generator, preferably in some cases, a gas generated from the gas generator does not contain any scattering materials such as solids in relation to a structure of the whole system. In order to obtain such a gas generator, in an initiator constituting the gas generator, a gas discharged at the time of activation desirably consists of vapor without any combustion residue, other fluid, semi-fluid or solid generated due to the activation.

### Disclosure of the Invention

The present invention is made in order to solve the above-described problems, and an object of the present invention is to provide an electric type initiator which can ensure reliability during activation and can be manufactured easily. Another object of the present invention is to provide an electric type initiator which can be used for any seat belt pretensioner system activated by a gas generated from a gas generator and can be easily manufactured, an initiator assembly and a gas generator for pretensioner.

The present invention relates to an electric type initiator which comprises a priming to be ignited by a bridge wire generating heat and a cavity for storing the priming, wherein, the cavity is formed in a cylindrical shape and an opening end portion thereof is closed by a cover member, and the cover member is formed separately from a peripheral wall portion forming the cavity.

And, the present invention relates to an electric type initiator which comprises a priming to be ignited by a bridge wire generating heat and a cavity for storing the priming, wherein the cavity is formed in a cylindrical shape and an opening end portion thereof is closed by a cover member, the cover member is formed separately from a peripheral wall portion forming the cavity, and further, the cavity comprises a cylindrical charge holder forming the peripheral wall portion, a header closing one end opening of the charge holder and a cover member closing the other end opening of the charge holder.

The present invention provides an electric type initiator comprises a conductive pin for transmitting an electric energy to a bridge wire and a header for holding the conductive pins. The header is made of a resin material.

The charge holder is fitted outwardly to the header member and may be jointed to an outer circumferential surface of the header member. Namely, the present invention provides an electric type initiator which comprises a header member holding at least one conductive pin, a cavity defined at an end surface of the header member and a priming stored in the cavity to be ignited by a bridge wire generating heat, wherein the cavity is defined inside a charge holder including an annular circumferential wall provided at an end surface of the header member, and the charge holder is jointed to an outer circumferential surface of the header member.

The cavity formed in the electric type initiator may be defined inside a metallic cap member in a cylindrical shape with a top engaging to the header of the electric type initiator.

Alternatively, the cavity formed in the electric type initiator may be defined inside the charge holder including an annular circumferential wall provided at an end surface of the header member, and the outside of the charge holder is covered with the metallic cap member.

The present invention provides an initiator assembly, that is, an initiator assembly comprising one of the above-described electric type initiators and a collar member for fixing the electric type initiator.

For example, the present invention provides an initiator assembly which comprises an electric type initiator to be activated by an activating signal and a collar member for fixing the electric type initiator, wherein the electric type initiator comprises a header member holding at least one conductive pin, a cavity defined at an end surface of the header member and a priming stored in the cavity to be ignited by a bridge wire generating heat. And the cavity is defined inside a metallic cap member which is in a cylindrical shape with a top and engages with the header member.

Further, the present invention is an initiator assembly which comprises an electric type initiator to be activated by an activating signal and a collar member for fixing the electric type initiator, wherein the electric type initiator comprises a header holding at least one conductive pin, a cavity defined at an end surface of the header member and a priming stored in the cavity to be ignited by a bridge wire generating heat. And the cavity is defined inside a charge holder including an annual circumferential wall provided at an end surface of the header member, and the outside of the charge holder is covered with the metallic cap member.

The present invention provides a gas generator for pretensioner which uses the above-described electric type initiator or the initiator assembly.

For example, the present invention provides a gas generator for pretensioner which comprises any one of the above-described electric type initiators, a collar member for fixing the electric type initiator, a cup member having a lower opening portion fixed to the collar member to partially surround the initiator and a gas generating agent loaded in a space portion between the cup member and the electric type initiator to be ignited and burnt by the activation of the initiator.

And, the present invention provides a gas generator for pretensioner which comprises any one of the above-described initiator assemblies including an electric type initiator and a collar member for fixing the electric type initiator, a cup member having a lower opening portion fixed to the collar member of the initiator assembly to partially surrounds the initiator and a gas generating agent loaded into a space portion formed between the cup member and the initiator assembly to be ignited and burnt by the activation of the initiator assembly.

The present invention provides a method of manufacturing an electric type initiator which comprises a step of mounting a cylindrical charge holder for forming a cavity to a header holding a conductive pin, a step of press-loading a priming into an inner space of the charge holder and a step of closing an opening end of the charge holder by a cover member to close the cavity.

### Detailed Description of the Invention

The electric type initiator of the present invention is characterized in a structure for forming a cavity storing a priming as well as materials of a header holding a conductive pin. Particularly in the electric type initiator characterized in the structure for the cavity, contact between the bridge wire converting an electric energy to a thermal energy and the priming to be ignited and burnt by the bridge wire generating heat, and connection between the bridge wire and the conductive pin transmitting an electrical energy to the bridge wire are secured, and further, no gap between the conductive pin and the header holding the conductive pin is obtained. This electrical type initiator can be used in a gas generator for an air bag and a gas generator for a seat belt pretensioner so that the reliability in the activation of theses safety system can be enhanced.

In other words, the electric type initiator of the present invention includes a priming to be ignited by a bridge wire generating heat and a cavity for storing the priming, wherein the cavity is formed in a cylindrical shape and has an opening end portion closed by a cover member, and the cover member is formed separately from a peripheral wall portion forming the cavity. The cavity storing the priming can be defined by a cylindrical charge holder forming the peripheral wall portion, a header closing one end opening of the charge holder and a cover member closing the other end opening of the charge holder.

The charge holder forming a circumferential wall of the cavity and the header closing one of opening ends of the cavity are formed separately. Alternatively, the both members can be formed integrally. That is, the charge holder and the header can be formed integrally by injection-molding or the like. Or the charge holder and the header are formed separately to be connected with each other.

However in this electric type initiator, the cover member closing a opening end (i.e., an end surface opposite to the end surface of the charge holder closed by the header) of the cavity for storing the priming is required to be separated from the charge holder. This is because the priming is press-loaded in the opposite side to the cover member inside the cavity, and then the cavity is closed by the cover member. By press-loading the priming in the opposite side to the cover member inside the cavity, the priming can securely contact the bridge wire.

In other words, the charge holder is closed by the header and the cover member opposing each other, and generally, an end portion of the conductive pin inserted into the header is arranged in the opposite side to the cover member in the cavity. A bridge wire capable of converting an electric energy into a thermal energy is connected on a top end of the conductive pin. By press-loading the priming in the bridge wire side, i.e., in the opposite side to the cover member, the priming can securely contact the bridge wire. And, as the priming contacts securely the bridge wire, the priming can be ignited unfailingly by the bridge wire generating heat with an electric energy.

Additionally, due to the direct contact between the priming and the bridge wire, a conventional primer such as lead styphnate disposed in the vicinity of a bridge wire in order to burn a priming is not required. Therefore, a lead material under the environment where the initiator is used can be eliminated. As a result, if such characteristics are provided, it is possible to realize an initiator which can be easily manufactured and reliable in activation without generating any lead at the activation.

The header closing the end surface of the cavity which stores the priming holds a conductive pin for transmitting an electric energy to the bridge wire. The header is preferably made of a resin material.

The above-described initiator is structured such that, for example, two conductive pins are inserted into the header, and end portions of the two conductive pins expose at the end surface of the header. The bridge wire is connected on the conductive pins to be able to electrify the end portions of the conductive pins, and the priming is press-loaded to contact the bridge wire. The priming may be press-loaded in such a manner that a cylindrical charge holder forming a cavity is mounted to the header and the priming is press-loaded into an internal space (inside the cavity) . Thereafter, the cover member is connected to an opening end of the charge holder, and the cavity storing the priming is closed. When the conductive pins receive an electric signal, the bridge wire generates heat to ignite and burn the priming. Flames thereof break a container forming the cavity which stores the priming and are discharged outside.

The present invention provides, relating to the above-described electric type initiator, an electric type initiator which has a characteristic in materials for the header holding a conductive pin. More specifically, in such electric type initiator, a header which holds a conductive pin and closes an end surface of the cavity storing the priming is made of a specific resin material.

The electric type initiator in which the header is formed in the above-described manner can be produced more easily at a less cost than the one in which the header is formed of a metal. If the header is made of the above-mentioned resin material, it is possible to avoid, as much as possible, a case such that the priming absorbs moisture to deteriorate due to permeation of water into the header. With such a header, the initial performance of the initiator can be exhibited even after standing for a long period of time under an automobile environment.

The electric type initiator with the above-described structure can constitute a gas generator for pretensioner together with a collar member fixing the electric type initiator, a cup member having a lower opening portion fixed to the collar member to partially surround the initiator and a gas generating agent loaded into a space portion formed between the cup member and the electric type initiator to be ignited and burnt by an activation of the initiator.

The initiator assembly of the present invention is characterized in that the outside of a storing chamber of the priming (i.e., the cavity) is covered with a metallic cap member. Accordingly, even if the cavity is defined by a member made of a resin material, pieces of the member made of the resin material broken by combustion of the priming are kept inside the cover member.

Namely, the initiator assembly of the present invention comprises an electric type initiator to be activated by an activating signal and a collar member fixing the electric type initiator, and is characterized in that the electric type initiator comprises a header member holding at least one conductive pin, a cavity defined at an end surface of the header member, a priming stored in the cavity to be ignited by a bridge wire generating heat and the cavity is defined in a cylindrical metallic cap member with a top which engages with the header member.

The present invention also provides an initiator assembly in which the cavity is defined inside the charge holder having an annular circumferential wall provided at an end surface of the header member and the outside of the charge holder is covered with the metallic cap member. In this case, a fitting structure and/or a fitting shape to fit an inner circumferential surface of the metallic cap member is desirably formed at an outer circumferential surface of the charge holder. In such fitting structure, the entire outer circumferential surface of the charge holder is formed in such a shape or a structure to abut the inner surface of the metallic cap. Or it is desirable that the outer circumferential surface of the charge holder is formed at least in such a shape or a structure extending in the circumferential direction to be able to abut the metallic cap member. For example, even if a portion of the outer circumferential surface of the charge holder is formed to have a flat surface along an axial direction of the charge holder, the flat surface is desirably provided with circular arc shaped protrusions to abut the inner surface of the metallic cap member. Thus, it is possible to prevent the priming from spilling out of the charge holder.

The charge holder can be formed in a shape with at least a circumferential wall, such as an annular shape or a cylindrical shape with a top. The charge holder is desirably jointed to the header member at an outer circumferential surface of the header member side. For example, an annular groove is formed at the header member, and a back end opening of the charge holder is received in the annular groove. The charge holder accommodated in the groove may be jointed to the circumferential surface of the annular groove at its outer circumferential surface. The charge holder may be jointed to the header member by conventionally known various methods. In particular, ultrasonic welding is preferable. In a case of jointing these by the ultrasonic welding, by performing shear joint at the outer circumferential surface of the charge holder, the charge holder is jointed securely to the header member. Further, it is possible to prevent the bridge wire which converts an electric energy into a thermal energy from being cut off.

In a preferred embodiment of the present invention, either an opening portion or a breakable portion or both of them may be formed at a circular portion formed at an end portion of the metallic cap member. The breakable portion is formed to be broken by combustion pressure of the priming. For example, the breakable portion can be obtained by making the circular portion of the metallic cap member partially thinner or by forming a radial shaped or closed shaped notch at the circular portion. When the opening portion is formed at the circular portion of the metallic cap member, it is possible to adjust an ejecting direction of combustion flames of the priming or an intensity thereof at a time of ejection by the position and/or a diameter of the opening portion. When the opening portion is formed, the cover member desirably seals the cavity off outside of the cap member in order to keep the priming in the cavity.

The cap member is desirably fixed together with the header member by crimping the collar member. Thus, the metallic cap member is fixed reliably, and even if the priming is burnt, the cap member is reliably held.

In the initiator assembly of the present invention, when the electric type initiator is provided such that the header member is formed to hold at least two conductive pins, a bridge wire is electrically connected on top ends of the conductive pins. The bridge wire can convert en electric energy into a thermal energy. The top ends of the conductive pins (i.e., where the bridge wire is connected) are desirably flush with the end surface of the header member.

Since the end surfaces of at least two conductive pins are flush with the end surface of the header member, an operation of jointing the bridge wire to the conductive pins becomes easier and it is possible to avoid a damage of the bridge wire at a time of press-loading the priming.

In the above-described initiator assembly, by the conductive pins of the electric type initiator receiving an electric signal, the bridge wire generates heat to ignite and burn the priming. Flames thereof break a container which forms the cavity storing the priming, and are discharged outside. At that time, in the initiator assembly of the present invention, as the metallic cap member is disposed outside the container which forms the cavity of the electric type initiator, broken pieces of the container which forms the cavity are remained in the cap member, being not discharged, even after the electric type initiator starts activation.

In relation to the above-described initiator assembly, the present invention also provides an electric type initiator characterized in a structure of fixing a charge holder which defines a cavity storing a priming.

Namely, the present invention provides an electric type initiator which comprises a header member holding at least one conductive pin, a cavity defined at an end surface of the header member and a priming stored in the cavity to be ignited by a bridge wire generating heat, wherein the cavity is defined inside a charge holder having an annual circumferential wall provided at an end surface of the header member, and the charge holder is jointed to the header member at an outer circumferential surface of the header member.

Further, the electric type initiator of the present invention includes a priming to be ignited by the bridge wire generating heat and a cavity storing the priming. The cavity is formed cylindrically in shape, and its opening end is closed by a cover member. The cover member may be formed separately from a peripheral wall portion forming the cavity. The cavity storing the priming may be defined by the cylindrical charge holder forming the peripheral wall portion, the header closing one end opening of the charge holder and the cover member closing the other end opening of the charge holder.

The charge holder forming the circumferential wall of the cavity and the header closing one of opening ends of the cavity may be formed separately or integrally. That is, the charge holder and the header may be formed integrally by injection-molding. Or, the charge holder and the header are formed separately to be joined to each other.

In this electric type initiator, the cover member which closes a opening end (i.e., an end opposite to the end surface of the charge holder closed by the header) of the cavity serving as a priming storing space is desirably formed separately from the charge holder. This is because the priming is press-loaded in the side opposite to the cover member inside the cavity and then the cavity is closed by the cover member. By press-loading the priming in the side opposite to the cover member inside the cavity, the priming can contact unfailingly the bridge wire. That is, the charge holder is closed by the header and the cover member which are provided opposite to each other. Top portions of the conductive pins inserted into the header are usually disposed in the side opposite to the cover member inside the cavity. The bridge wire capable of converting an electric energy into a thermal energy is connected to the conductive pins. By press-loading the priming in the bridge wire side i.e. in the side opposite to the cover member, the priming can unfailingly contact the bridge wire. Since the priming unfailingly contacts the bridge wire, the priming can be surely ignited by the bridge wire generating heat with an electric energy.

With the direct contact between the priming and the bridge wire, a conventional primer such as lead styphnate disposed in the vicinity of the bridge wire in order to burn the priming is not required. Therefore, a lead material can be removed in an environment where the initiator is used. As a result, if such characteristics are provided, it is able to realize an initiator which can be easily manufactured and is reliable in operation without generating any lead at the activation.

If the priming is not press-loaded by the above-described manner, the charge holder and the cover member may be formed integrally.

The above-described electric type initiator has a structure such that two conductive pins are inserted into a header to have top portions thereof exposed on the end surface of the header. A bridge wire is connected on the top portions of the conductive pins to apply an electricity therebetween, and a priming is press-loaded to contact the bridge wire. The priming may be press-loaded in such a manner that a cylindrical charge holder forming a cavity is mounted to the header and the priming is press-loaded into an internal space (cavity). Thereafter, a cover member is connected to an opening end of the charge holder and closes the cavity storing the priming.

In relation to the above-described electric type initiator, the present invention may also provide an electric type initiator characterized in materials for a header holding conductive pins. More specifically, in such electric type initiator, the header holding the conductive pins as well as closing an end surface of a cavity storing a priming is formed of a particular resin material.

In a case of the electric type initiator including a header formed by the above-described manner, as compared to the case of forming the header with metal, manufacturing thereof is easier and manufacturing costs can be reduced. When the header is formed of the above-mentioned resin material, it is possible to avoid, as much as possible, a case such that the priming absorbs moisture to deteriorate due to permeation of water into the header. With such a header, the initial performance of the initiator can be exhibited even after standing for a long period of time under an automobile environment.

The electric type initiator with the above-described structure can constitute a gas generator for pretensioner, together with a collar member fixing the electric type initiator, a cup member having lower opening end portion fixed to the collar member to surround partially the initiator and a gas generating agent loaded into a space portion formed between the cup member and the electric type initiator to be ignited and burnt by an activation of the initiator.

In accordance with the present invention, it is possible to provide an initiator device, an electric type initiator, an initiator assembly and a gas generator for pretensioner which are reliable in the activation and can be easily manufactured.

Particularly in the electric type initiator of the present invention, since a cavity storing a priming is closed by a cover member, the priming to be ignited and burnt by a thermal energy of a bridge wire can be press-loaded into the cavity from the side to be closed by the cover member. Further, as the bridge wire is disposed in the side where the priming is loaded inside the cavity, the priming contacts unfailingly the bridge wire and a contact state is maintained. By forming the electric type initiator by the above-described manner, the electric type initiator can be manufactured more easily.

In the initiator assembly of the present invention, the cavity storing the priming is obtained inside the cap member made of a metal so that, even if the cavity is defined by a member such as the charge holder made of a resin material, pieces of the resin material broken due to combustion of the priming can be kept inside the metallic cap member. Accordingly, any solid material can be prevented from discharging, so that the initiator assembly of the present invention can be appropriately used in any seat belt pretensioner system as long as it is a seat belt pretensioner system to be activated by a gas generated from the gas generator.

If the cavity of the electric type initiator storing the priming is closed by the cover member, it is possible to press-load the priming to be ignited and burnt by a thermal energy of the bridge wire into the cavity. Moreover, as the bridge wire is disposed in the side where the priming is press-loaded inside the cavity, the priming contacts unfailingly the bridge wire and a contact state is maintained. By forming the electric type initiator in this way, the electric type initiator can be manufactured more easily.

### Brief Description of the Drawings

Fig. 1 is a vertical sectional view showing one embodiment of an electric type initiator according to the present invention.
Fig. 2 is a schematic view showing an example of a process of manufacturing a gas generator for pretensioner which uses the electric type initiator shown in Fig. 1.
Fig. 3 is a vertical sectional view of one embodiment of an initiator assembly which uses the initiator according to the present invention.
Fig. 4 is a vertical sectional view of an embodiment of the initiator assembly according to the present invention.
Fig. 5 is a vertical sectional view of a gas generator for pretensioner formed by using the initiator assembly shown in Fig. 1.
Fig. 6 is a vertical sectional view of other embodiment of an initiator assembly.

In the drawings, the reference numeral 1 denotes a header; the reference numeral 2 denotes a conductive pin; the reference numeral 3 denotes a bridge wire; the reference numeral 4 denotes a charge holder; the reference numeral 5 denotes a cavity; the reference numeral 6 denotes a cover member; the reference numeral 7 denotes a priming; the reference numeral 13 denotes a collar; the reference numeral 20 denotes a cup member; the reference numeral 22 denotes a gas generating agent; the reference numeral 70 denotes an electric type initiator; the reference numeral 80 denotes a metallic cap member.

### Preferred Embodiments of the Invention

The present invention will be described in detail hereinafter with reference to the drawings showing one embodiment of the present invention.

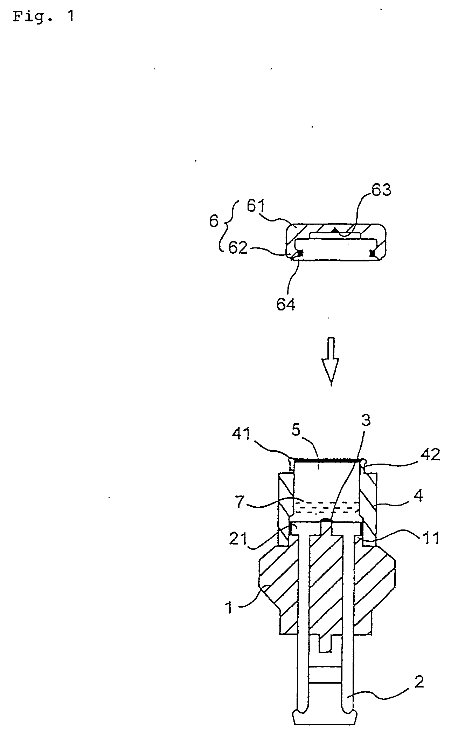

Fig. 1 is an drawing of decomposed parts showing one embodiment of an electric type initiator according to the present invention.

In the electric type initiator shown in this drawing, two conductive pins 2 whose flange-like top portions 21 expose at an end portion of a header 1 are inserted into the header 1 formed of a glass fiber reinforced resin. The top portions 21 of these conductive pins are connected to each other by a bridge wire 3 so as to be electrified. Desirably, these are connected to each other by resistance-welding. These can be connected to each other with solder seal, however, in such a case, an additional material (such as a solder or a flux) is further required, which makes the manufacturing more difficult and costly. An interval between the flange-like top portions 21 of the conductive pins 2 is adjusted. The conductive pins 2 are inserted into the header 1, and in order to block an entering of the ambient air or a gas leakage between the header and the conductive pin, a knurl (concave and convex surfaces, a rib or a boss formed in the circumferential direction) is desirably formed between these members.

The header 1 is made of a resin material.

The header 1 is formed such that the end surface where a top portion 21 of a conductive pin 2 is exposed is cylindrically projected. The projected portion (hereinafter, referred to as a cylindrical end portion 11) of the header 1 is fitted into a charge holder 4 formed in a substantially cylindrical shape to be a connecting portion between the header 1 and the charge holder 4. These can be joined by an ultrasonic welding.

A cavity 5 is defined an end surface of the cylindrical end portion 11 of the header and the charge holder 4. A priming 7 to be ignited and burnt by a bridge wire 3 generating heat with an electric energy is press-loaded into the cavity 5. As a priming, a mixture (ZPP) of zirconium/potassium perchlorate is appropriately used.

In the present embodiment, an opening end 41 of the charge holder 4, i.e., the end portion thereof opposite to the other where the circular end portion 11 is fitted in is formed such that an outer circumference thereof is step-notched. A cover member 6 which is formed separately from the charge holder 4 forming a peripheral wall portion of the cavity 5 is fitted at the outside of the stepped notch portion 42. The charge holder 4 and the cover member 6 are joined by ultrasonic welding. Thus, the cavity 5 in which priming 7 is stored is closed and is covered from the external environment. The cover member 6 comprises a circular portion 61 for closing the cavity 5 and a peripheral wall portion 62 jointed to the stepped notch portion 42. In the circular portion 61, a breakable portion 63 is formed by making a part of the circular portion thinner or by forming a groove on the circular portion. A projection 64 jointed to the stepped notch portion 42 of the charge holder 4 is formed at the peripheral wall portion 62. When the priming 7 is burnt, the breakable portion 63 breaks prior to other wall portions to control an ejecting direction of flame or gas. When an ejecting direction of the flame or the like is controlled, thermal energy such as flame is discharged intensively, and thereby, a gas generating agent can be ignited unfailingly. As the projection 64 is jointed to the stepped notch portion 42, welding can be performed easily and securely.

The bridge wire 3 generates heat by an electric energy (i.e., an activating signal) being inputted via the conductive pins and has an electric resistance. The bridge wire 3 may be made of one or a plurality of metals (metallic wires) . The bridge wire 3 is formed of nickel-chrome-iron alloy referred to as Nichrome. Alternatively, the bridge wire 3 may be formed of a stainless steel or a platinum. Particularly, Nichrome is preferable because it has a large temperature coefficient of resistance (TCR) and accomplishes excellent welding.

In an operation of the electric type initiator, after an activating signal is received by a connector (not shown) connected to the conductive pins 2, the activating signal is transmitted to the bridge wire 3 via the conductive pins 2. The bridge wire 3 generating heat with the electric energy (i.e., activating signal) ignites and burns the priming 5 to discharge a flame and a gas outside. At this time, as the cover member 6 is provided with the breakable portion 63, the breakable portion 63 is primarily broken to control an ejecting direction of the flame or the gas.

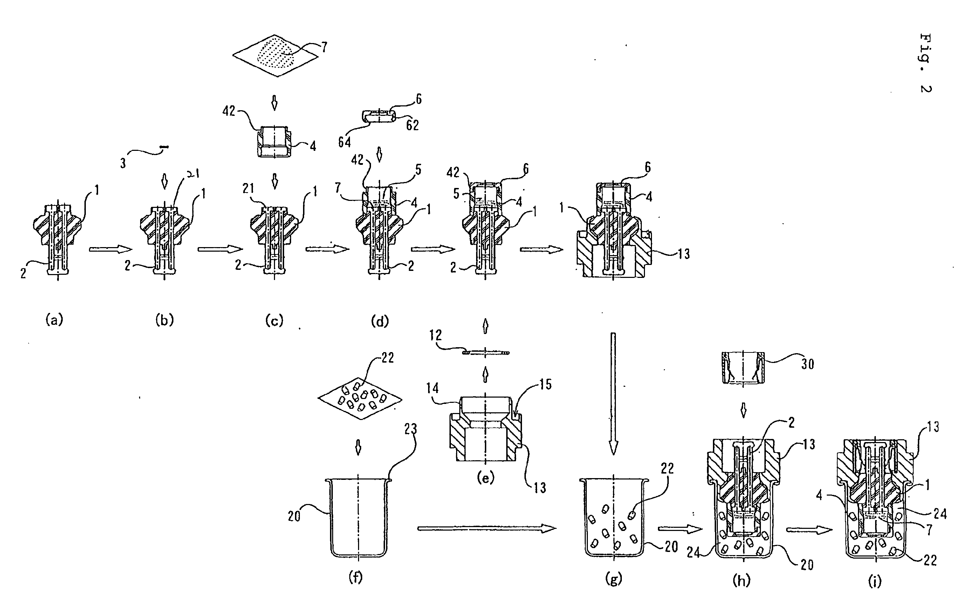

The above-described electric type initiator in which the cavity 5 storing the priming 7 is closed by the cover member 6 can be manufactured, for example, according to the process shown in Fig. 2 (a) to (e).

Firstly, a header assembly obtained by inserting two conductive pins 2 into the header 1 made of a resin material is polished (Fig. 2(a)). Then, the bridge wire 3 is disposed on the top portions 21 shaped like a flange in the conductive pins 2 (Fig. 2(b)) and is connected by resistance welding to form a bridge wire (B/W) welded sub-assembly (Fig. 2(b)→(c)). The cylindrical charge holder 4 is disposed at the top portion 21 side of conductive pins 2 in the bridge wire (B/W) welded sub-assembly and joined thereto by ultrasonic welding. Further, the priming 7 is press-loaded in the charge holder 4 to form a charge holder (C/H) welded sub-assembly (Fig. 2 (c)→(d)). Then, in the charge holder (C/H) welded sub-assembly, the cover member 6 is joined to close the opening end (i.e., stepped notch portion 42) of the charge holder 4 by ultrasonic welding so that an initiator is obtained (Fig. 2(d)→(e)). In the aspect shown in Fig. 2, the projection 64 is provided at the peripheral wall portion 62 of the cover member 6 and jointed to the stepped notch portion 42 of the charge holder 4 such that these can be fitted and joined to each other before welding.

Next, a collar 13 is arranged via a gasket 12 opposite to the charge holder 4 side in the initiator obtained in the above-described manner, the initiator is press-inserted thereto and an end portion 14 of an initiator receiving opening in the collar 13 is crimped to be integrated, thereby forming an initiator assembly (Fig. 2 (e)→(g)). It is desirable that the end portion 14 of the initiator receiving opening is formed so that a pawl (i.e., crimped portion) is made short in order to avoid electrostatic discharge between the pawl and the pin. If a distance between the pawl and the pin is little, electrostatic discharge occurs between them so that the priming may be ignited. Thus, by making a good distance between the pawl and the pin, discharge therebetween can be avoided.

The initiator assembly obtained in the above-described manner can be used as a constituting component to produce a gas generator for a seat belt pretensioner. The gas generator for pretensioner which uses the initiator assembly can be produced, for example, according to the process shown in Fig. 2 (f) to (i).

Firstly, a gas generating agent 22 is loaded into a cup member 20 which has a cylindrical shape with a bottom and an opening end 23 bent like a flange (Fig. 2(f)). The gas generating agent 22 is ignited or burnt due to the activation of the initiator, more particularly, by a gas, a flame or a mist and the like generated due to combustion of the priming. Then, a sealant (or waterproofing agent) is injected into the circular groove 15 formed at the collar 13 in the initiator assembly shown in Fig. 2(g), and the flange portion 23 of the cup member 20 is fitted into the circular groove. Then, a circumferential wall of the circular groove 15 is crimped to connect the initiator assembly to the cylindrical member 20. At that time, the charge holder 4 side of the initiator assembly is press-inserted into the cup member (Fig. 2(g→h)). With this, the gas generator for pretensioner is almost completed. In Fig. 2, in order to accomplish easy and reliable connection of a connector (not shown) for transmitting an activating signal to the gas generator, a retainer 30 is disposed at the initiator side (Fig. 2(h)). As the retainer 30, known retainers which have functions of positioning a connector which is jointed to the conductive pins 2 and of holding and fixing the connector may be used.

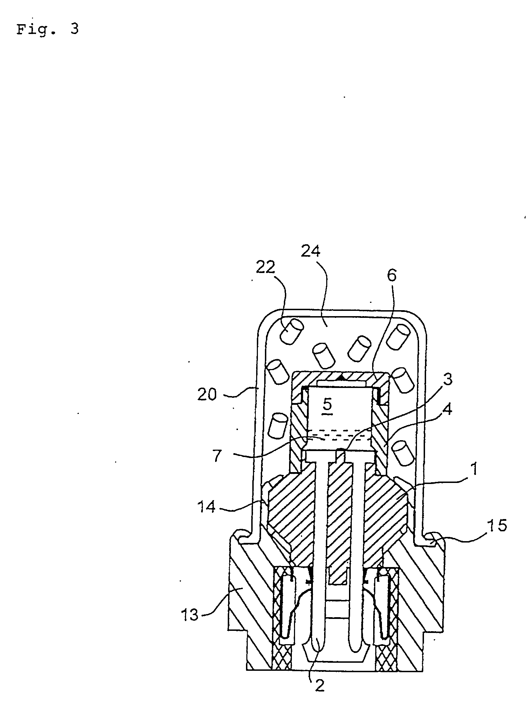

In the gas generator for pretensioner (Fig. 3) produced in the above-described manner, when electric current for ignition is transmitted to the conductive pins 2, the initiator is activated so that a flame, a gas, or a mist and the like is generated due to combustion of the priming 7. A flame and the like ignites or burns the gas generating agent 22 stored in a chamber (combustion camber 24) inside the cup member 20 to generate a working gas. Then, the working gas breaks the cup member 20 to be discharged outside.

In particular, as shown in Fig. 2(g), by loading a sealant into the connecting portion of the initiator assembly and the cup member, i.e., the circular groove 15 in the present embodiment, it is possible to provide moisture-proofing of the gas generating agent 24 stored in the cup member 20.

Hereinafter, the present invention will be described in detail with reference to the drawings showing one embodiment of an initiator assembly of the present invention.

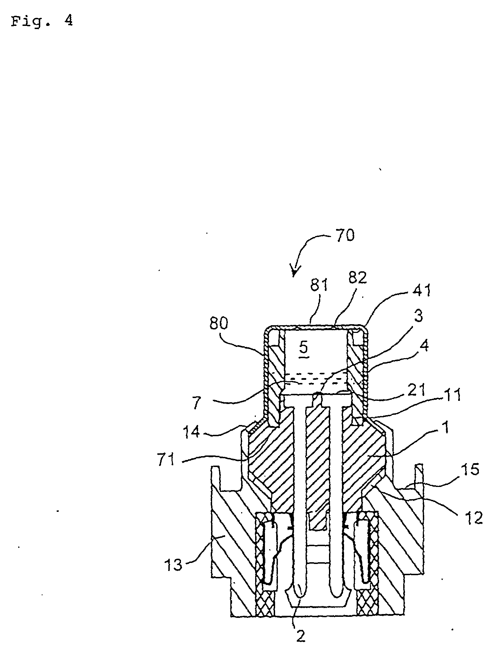

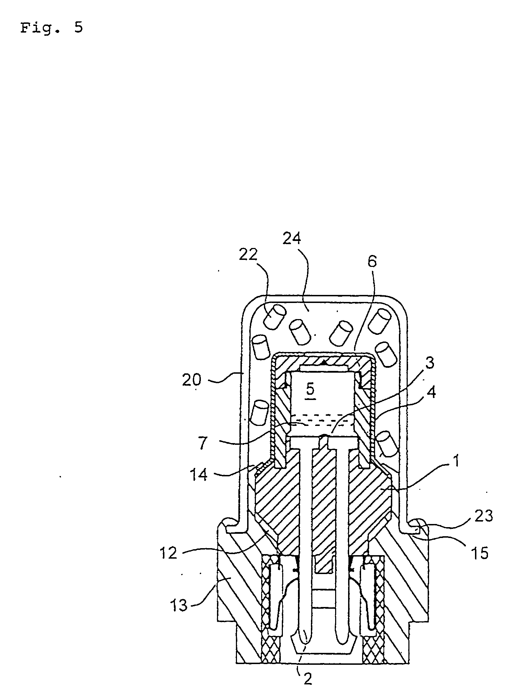

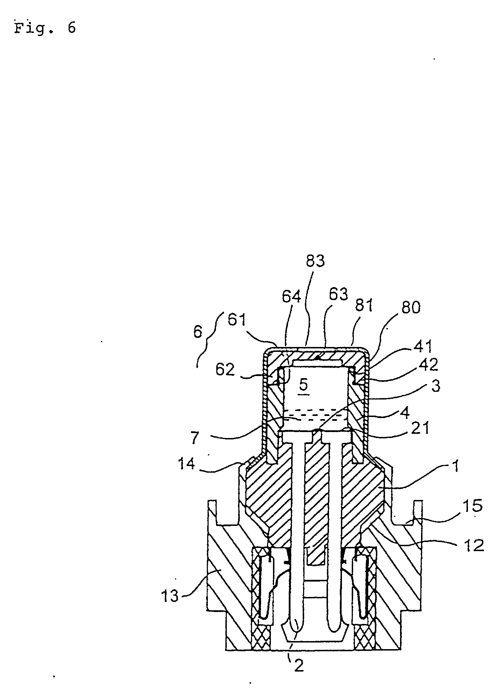

Fig. 4 is a vertical sectional view showing an embodiment of the initiator assembly relating to the present invention. Fig. 5 is a vertical sectional view of a gas generator for pretensioner relating to the present invention which is formed by using the initiator assembly shown in Fig. 4. Fig. 6 is a vertical sectional view of an initiator assembly of another embodiment.

The initiator assembly shown in Fig. 4 comprises an electric type initiator 70 and a metallic collar member 13 which holds the electric type initiator 70. A portion of the electric type initiator 70 which protrudes from the collar member (i.e., a cavity 5) is covered with a metallic cap member 80 formed in a cylindrical shape with a top.

In the electric type initiator 70, two conductive pins 2 whose flange-like top portions 21 expose at an end portion of a header 1 are inserted into the header 1 made of a glass fiber reinforced resin. The top portions 21 of these conductive pins are connected by a bridge wire 3 such that electricity can be applied therebetween. Desirably, the top portions 21 are connected with the bridge wire 3 by resistance-welding. Although the top portions 21 can be connected with the bridge wire 3 by solder seal, however, in such a case, materials (a solder or a flux) are further required, thereby making manufacturing more difficult and costly. A distance between the flange-like top portions 21 of the conductive pins 2 is adjusted. When the conductive pins 2 are inserted into the header 1, in order to prevent entering of an ambient air or a gas leakage between the header and the conductive pin, a knurl (concave and convex surfaces, a rib or a boss formed in the circumferential direction) is desirably formed between these members. The conductive pins 2 are disposed such that the top portions 21 thereof are flush with an end surface of the header member.

The header member 1 is made of a resin material. In the header member 1, an end surface where the top portions of the conductive pins expose is protruded cylindrically to form a cylindrical end portion 11. An annual groove 71 is formed on the periphery of the cylindrical end portion 11. The cylindrical end portion 11 of the header portion 1 is fitted into the charge holder 4 formed in a substantially cylindrical shape. And the charge holder 4 is received in the annual groove 71. An outer circumferential surface of the charge holder 4 is jointed to an opposing circumferential surface of the annual groove by ultrasonic welding.

In the initiator assembly shown in Fig. 4, a cavity 5 comprises an end surface of the cylindrical end portion 11 of the header member 1 and the charge holder 4. A priming 7 to be ignited and burnt by the bridge wire 3 which generates heat with an electric energy is press-loaded into the cavity 5. As such priming 7, a mixture (ZPP) of zirconium/potassium perchlorate is appropriately used.

The bridge wire 3 generates heat by an electric energy (i.e., an activating signal) inputted via the conductive pins and has an electric resistance. The bridge wire 3 may be made of one or a plurality of metals (metallic wires). The bridge wire 3 is made of nickel-chrome-iron alloy referred to as Nichrome. Alternatively, the bridge wire 3 may be made of a stainless steel or a platinum. Particularly, Nichrome is preferable because it has a large temperature coefficient of resistance (TCR) and accomplishes excellent welding.

In the activation of the electric type initiator, when an activating signal is received by a connector (not shown) connected to the conductive pins 2, the activating signal is transmitted to the bridge wire 3 via the conductive pins 2. The bridge wire 3 generates heat by the electric energy (i.e., activating signal) to ignite and burn the priming 7, and a flame and a gas and the like thereof are discharged outside.

The above-described electric type initiator 70 is fixed to the collar member 13 together with the metallic cylindrical cap member 80 with a top to form the initiator assembly.

The metallic cap member 80 is formed at least to surround the cavity 5. In this aspect, the cylindrical charge holder 4 is disposed at the header member 1 to form the cavity 5 therein. Therefore, the cap member 80 is disposed to surround the outside of the charge holder 4 which forms the cavity 5. However, if the charge holder 4 is not particularly required, the inside of the metallic cap member 80 may be the cavity 5.

In the initiator assembly in the aspect shown in Fig. 4, a breakable portion 82 to be broken due to a combustion pressure of the priming 7 is formed in a circular portion 81 provided at an end portion of the metallic cap member 80. The breakable portion 82 can be obtained by making part of the circular portion 81 of the metallic cap member thinner, or by forming a notch in a radial shape such as a cross or in a closed shape such as a ring and a polygon at the circular portion 81 of the metallic cap member 80

When the breakable portion 82 is formed at the circular portion 81 of the metallic cap member 80 in the above described manner, the opening end 41 of the charge holder 4, that is, an end portion opposite to the side where the circular end portion 11 of the header member is fitted in can be closed by the metallic cap member 80 practically. However, in this case, the charge holder 4 may be closed by a cover member 6 described later.

When the charge holder 4 is disposed, a ring-shaped fitting structure which fits an inner circumferential surface of the metallic cap member 80 is desirably formed at an outer circumferential surface of the charge holder 4. As such a fitting structure, at least a structure such that no gap is made between the outer circumferential surface of the charge holder 4 and the inner circumferential surface of the metallic cap member 80 can be appropriately adopted. With this structure, the priming 7 can be blocked not to be spilled out of the charge holder 4. For example, with regard to protrusion of burrs formed at a time of molding the charge holder 4, a flat surface may be formed at the outer circumferential surface of the charge holder 4. In this case, an arc shaped protrusions to fit the inner surface of the metallic cap member may be formed at the flat surface along the circumferential direction.

The metallic cap member 80, as well as the electric type initiator 70, is fixed, by crimping, to the collar member 13 made of a metal. Specifically, an end portion 14 of an opening (hereinafter, referred to as an initiator receiving opening) formed at the collar member 13 for receiving the electric type initiator is crimped to fix the metallic cap member 80 and the electric type initiator 70 to the collar member 13. Thus, even after the priming 7 is burnt, the cap member 80 can be held reliably to the collar member 13.

The initiator assembly with the above-described structure is combined with the cylindrical cap member 20 having a top and the gas generating agent 22 which is to be ignited and burnt by combustion of the priming 7, thereby forming a gas generator for pretensioner shown in Fig. 5.

Specifically, the gas generating agent 22 is stored in the cup member 20, and the initiator assembly is inserted from the opening end portion side of the cup member 20 and is fixed thereto. The initiator assembly can be fixed to the cup member 20 as follows. A sealant (or waterproofing agent) is injected into the circular groove 15 formed at the collar member 13. Then, the flange portion 23 of the cup member 20 is fitted into the circular groove, and a circumferential wall of the circular groove 15 is crimped.

Next, in relation to the initiator assembly shown in Fig. 4, an embodiment of an initiator assembly in which an opening portion 83 is formed at a circular portion 81 of the metallic cap member 80 will be described based on Fig. 6.

In the initiator assembly shown in Fig. 6, in order to hold the priming 7 within the cavity 5, the opening end 41 of the charge holder 4 is closed by the substantially circular cover member 6. That is, the cover member 6 may serve as a closing member for shutting the cavity 5 from the outside of the cap member 80.

In the initiator assembly shown in Fig. 6, an opening end 41 of the charge holder 4, i.e., an end portion opposite to the side where the circular end portion 11 of the header member is fitted in is formed such that the outer periphery thereof is step-notched. A cover member 6 formed separately from the charge holder 4 is fitted at the outside of the stepped notch portion 42. The charge holder 4 and the cover member 6 are joined by ultrasonic welding. Thus, the cavity 5 in which priming 7 is stored is closed and is shut from the external environment.

In the aspect shown in Fig.6, the cover member 6 comprises a circular portion 61 for closing the cavity 5 and a peripheral wall portion 62 jointed to the stepped notch portion 42. At the circular portion 61, a breakable portion 63 obtained by making part of the circular portion thinner or by forming a groove on the circular portion is formed. A projection 64 jointed to the stepped notch portion 42 of the charge holder 4 is provided at the peripheral wall portion 62. When the priming 7 is burnt, the breakable portion 63 breaks prior to other wall portions to control an ejecting direction of flame or gas. If an ejecting direction of the flame or the like is controlled, thermal energy such as flame is discharged intensely, so that a gas generating agent can be ignited unfailingly. And, as the protrusion 64 is jointed to the stepped notch portion 42, welding of the charge holder 4 and the cover member 6 can be performed easily and securely.

As the initiator assembly shown in Fig. 6, when the opening portion 83 is formed at the circular portion 81 of the metallic cap member 80, an ejecting direction of a combustion flame caused by the priming 7 stored in the cavity 5 and/or an intensity of the ejection can be adjusted by the position where the opening end portion 83 is formed and/or a diameter of the opening.

Finally, a process of manufacturing the electric type initiator, the initiator assembly of the present invention and the gas generator for pretensioner formed by using the initiator assembly will be illustrated in that order.

Firstly, a header member 1 is formed by pouring a melted resin material around two conductive pins 2 and then is polished. Then, the bridge wire 3 is disposed on the top portions 21 shaped like a flange of the conductive pins 2 and is connected by resistance welding to form a bridge wire (B/W) welded sub-assembly. The back end of the cylindrical charge holder 4 is disposed in an annular groove formed around the top portions 21 of the conductive pins 2 in the bridge wire (B/W) welded sub-assembly. At that time, an lower end outer circumferential surface of the charge holder 4 and a opposing circumferential surface of the annular groove are jointed by ultrasonic welding. Further, the priming 7 is press-loaded in the charge holder 4 to form a charge holder (C/H) welded sub-assembly. Then, in the charge holder (C/H) welded sub-assembly, the cover member 6 is connected to the opening end (i.e., stepped notch portion 42) of the charge holder 4 by ultrasonic welding to close the opening end portion, thereby, forming an electric type initiator 70.

Next, the electric type initiator 70 obtained in this manner is press-inserted to the collar member 13 which is provided, via gasket 12, opposite to the charge holder of the initiator 70. And the metallic cap member 80 which is formed in a cylindrical shape having a top and has an opening end spreading like a skirt is disposed at and surround the outside of the charge holder constituting the electric type initiator 70. The electric type initiator 70 and the metallic cap member 80 are integrated with the collar member 13 by crimping the end portion 14 of the initiator receiving opening of the collar member 13 to form the initiator assembly of the present invention. It is desirable that the end portion 14 of the initiator accommodating opening is formed so that a pawl (i.e., caulked portion) is made short in order to avoid electrostatic discharge between the pawl and the pin. If a distance between the pawl and the pin is short, electrostatic discharge occurs between the pawl and the pin, which may cause the priming to ignite. Thus, by making the distance between the pawl and the pin long, discharge therebetween can be avoided.

The initiator assembly produced in the above-described manner can be used as a constituting component for producing a gas generator used for a seat belt pretensioner. The gas generator for pretensioner which uses the initiator assembly can be produced, for example, by the following process.

Firstly, a gas generating agent 22 is loaded into a cylindrical cup member 20 with a bottom which has the opening end 23 bent like a flange. The gas generating agent 22 is ignited and burnt due to the activation of the initiator, particularly, by a gas, a flame, a mist and the like generated by combustion of the priming. Then, a sealant (waterproofing agent) is injected into the circular groove 15 provided at the collar 13 constitutes the initiator assembly, and the flange portion 23 of the cup member 20 is fitted into the circular groove. Then, a periphery of the circular groove 15 is crimped to join the initiator assembly and the cup member 20. Then, a circumferential wall of the circular groove 15 is crimped to connect the initiator assembly to the cylindrical member 20. At that time, the charge holder 4 side of the initiator assembly is press-inserted into the cup member. With this, the gas generator for pretensioner is almost completed. In order to accomplish easy and reliable connection of a connector for transmitting an activating signal to the gas generator, a substantially annular retainer 30 is disposed at the side where the conducive pins of the electrical type initiator are exposed. As the retainer, known retainers which have functions of positioning a connector which is jointed to the conductive pins 2 and of holding and fixing the connector may be used.

In the gas generator for pretensioner (Fig. 5) produced in the above-described manner, when electric current for ignition is transmitted to the conductive pins 2, the electrical type initiator 70 is activated so that a flame, a gas, or a mist and the like is generated due to combustion of the priming 7. A flame and the like ignites or burns the gas generating agent 22 stored in a chamber (combustion camber 24) inside the cup member 20 to generate a working gas. Then, the working gas breaks the cup member 20 to be discharged outside. An breakable portion may be formed in an end surface of the cup member (end surface of the circular portion) to adjust the discharging direction of the working gas.

When a flame, a gas or a mist generated due to combustion of the priming 7 is discharged from the electric type initiator 70, a charge holder or a cover member for forming a cavity storing the priming may be broken. However, broken pieces are kept inside the metallic cap member. As a result, the broken piece can be prevented as much as possible from being discharged into the cup member or the outside thereof.

Particularly, as a sealant is loaded into the connecting portion of the initiator assembly and the cup member, i.e., into the circular groove 15 of the present embodiment, moisture-proofing of the gas generating agent 24 stored in the cup member 20 can be realized.

## Claims

1. An electric type initiator comprising:
a priming which is to be ignited by a bridge wire generating heat; and
a cavity for storing the priming;
wherein the cavity is formed in a cylindrical shape and an opening end portion thereof is closed by a cover member, and the cover member is formed separately from a peripheral wall portion forming the cavity.

2. The electric type initiator according to claim 1, wherein said cavity is defined by a cylindrical charge holder which forms the peripheral wall portion, a header which closes one end opening of the charge holder and a cover member which closes the other end opening of the charge holder.

3. The electric type initiator according to claim 1 or 2, wherein the priming stored in said cavity is press-loaded opposite to said cover member.

4. The electric type initiator according to claim 1 or 2, wherein a bridge wire which connects conductive pins to convert an electric energy into a thermal energy is disposed inside said cavity, and the priming stored in the cavity is press-loaded inside the cavity, in the side where the bridge wire is disposed.

5. The electric type initiator according to claim 4, wherein said priming comprises a mixture of zirconium/potassium perchlorate (ZPP), and contacts directly said conductive pins.

6. The electric type initiator according to any one of claims 1 to 5, wherein said charge holder is fitted outward to the header member and is jointed to the header member at an outer circumferential surface of the header member.

7. An electric type initiator comprising:
a header member which holds at least a single conductive pin;
a cavity which is defined at an end surface of the header member; and
a priming which is stored in the cavity and is ignited by a bridge wire generating heat;
wherein the cavity is defined inside a charge holder having an annular circumferential wall provided at an end surface of the header member, and the charge holder is jointed to the header member at an outer circumferential surface of the header member.

8. The electric type initiator according to claim 6 or 7, wherein said header member is provided with an annular groove for receiving a back end opening of said charge holder, and an outer circumferential surface of the charge holder received in the groove is jointed to a circumferential surface of the annular groove.

9. The electric type initiator according to any one of claims 6 to 8, wherein said header member is formed to hold at least two conductive pins, a bridge wire capable of converting an electric energy into a thermal energy is connected electrically between top ends of the conductive pins, and top ends of the conductive pins are disposed to be flush with an end surface of the header member.

10. The electric type initiator according to any one of claims 6 to 9, wherein the priming stored in said cavity is press-loaded in the header member side.

11. An initiator assembly comprising:
an electric type initiator; and
a collar member for fixing the electric type initiator;
wherein the electric type initiator is the electric type initiator according to any one of claims 1 to 10.

12. The initiator assembly according to claim 11, wherein the cavity formed in said electric type initiator is defined inside a metallic cap member which is in a shape of a cylinder with a top and engaged with a header of the electric type initiator.

13. An initiator assembly comprising:
an electric type initiator to be activated by an activating signal; and
a collar member for fixing the electric type initiator;
wherein the electric type initiator comprises a header member which holds at least one conductive pin, a cavity which is defined and formed at an end surface of the header member and a priming which is stored in the cavity to be ignited by a heat generated by a bridge wire,
wherein the cavity is defined inside a metallic cap member cylindrical which is in a shape of a cylinder with a top and engaged with the header member.

14. The initiator assembly according to claim 11, wherein the cavity formed in said electric type initiator is defined inside a charge holder which is provided at an end surface of the header member and has an annual circumferential wall, and the exterior of the charge holder is covered with the metallic cap member.

15. An initiator assembly comprising:
an electric type initiator to be activated by an activating signal; and
a collar member for fixing the electric type initiator;
wherein the electric type initiator comprises a header member which holds at least one conductive pin, a cavity which is defined and formed at an end surface of the header member and a priming which is stored in the cavity to be ignited by a bridge wire generating heat,
wherein the cavity is defined inside a charge holder which is provided at an end surface of the header member and has an annual circumferential wall, and an exterior of the charge holder is covered with the metallic cap member.

16. The initiator assembly according to claim 14 or 15, wherein an outer circumferential surface of said charge holder is formed to have a fitting structure and/or a fitting shape which fits an inner circumferential surface of said metallic cap member.

17. The initiator assembly according any one of claims 14 to 16, wherein said charge holder is jointed to said header member at the outer circumferential surface of the header member.

18. The initiator assembly according to any one of claims 14 to 17, wherein said header member is provided with an annular groove for receiving a back end opening of said charge holder, and the outer circumferential surface of the charge holder received in the groove is jointed to the circumferential surface of the annular groove.

19. The initiator assembly according to any one of claims 12 to 18, wherein a breakable portion to be broken due to a combustion pressure of the priming is formed in said metallic cap member.

20. The initiator assembly according to claims 19, wherein said breakable portion is obtained by partially making a circular surface formed at the end portion of the metallic cap member thinner or by forming a notch in a radial shape or a closed shape at the cover member.

21. The initiator assembly according to any one of claim 12 to'20, wherein an opening portion is formed at the circular surface formed at the end portion of said metallic cap member, and said cavity is shut from the outside of the cap member by a closing member.

22. The initiator assembly according to claim 21, wherein said cavity is defined inside the cylindrical charge holder disposed at the end surface of the header member and having an end open, and said charge holder is formed in a cylindrical shape and its opening end is closed by a cover member, and said closing member is a cover member for closing the opening end of the charge holder.

23. The initiator assembly according to claim 21 or 22, wherein an ejecting direction of combustion flame of said priming and/or an intensity of the ejection at a time of ejection is adjusted by the position where said opening portion is formed and/or a diameter of the opening.

24. The initiator assembly according any one of claims 12 to 23, wherein said cap member is fixed together with the header member by crimping the collar member.

25. The initiator assembly according to any one of claims 12 to 24, wherein said electric type initiator is formed such that the header member holds at least two conductive pins, a bridge wire capable of converting an electric energy into a thermal energy is electrically connected between top ends of the conductive pins, and top ends of the conductive pins are disposed to be flush with an end surface of the header member.

26. The initiator assembly according to any one of claims 12 to 25, wherein the priming stored in said cavity is press-loaded in the header member side.

27. A gas generator for pretensioner comprising:
an electric type initiator;
a collar member for fixing the electric type initiator;
a cup member whose lower opening portion is fixed to the collar member to partially surround said initiator; and
a gas generating agent which is loaded in a space portion between the cup member and the electric type initiator to be ignited and burnt by an activation of the initiator;
wherein said electric type initiator is an electric type initiator according to any one of claims 1 to 10.

28. A gas generator for pretensioner comprising:
an initiator assembly which includes an electric type initiator and a collar member for fixing the electric type initiator;
a cup member whose lower opening portion is fixed to the collar member of the initiator assembly to partially surround said initiator; and
a gas generating agent which is loaded into a space portion formed between the cup member and the initiator assembly to be ignited and burnt by an activation of the initiator assembly;
wherein the initiator assembly is the initiator assembly according to any one of claims 11 to 26.

29. A method of manufacturing an electric type initiator comprising the steps of:
mounting a cylindrical charge holder for forming a cavity to a header holding a conductive pin;
press-loading a priming into an internal space of the charge holder; and
closing an opening end of the charge holder with a cover member to close the cavity.
